# EUROPEAN PATENT SPECIFICATION

(11) **EP 2 889 407 B1**
(45) Date of publication and mention of the grant of the patent: **14.11.2018**
(21) Application number: 13831690.6
(22) Date of filing: 23.08.2013
(51) Int. Cl.: D04H 3/16, B32B 5/26, B60R 13/08, G10K 11/162, D04H 1/4291, D04H 1/56, D01F 6/04, D01F 6/06, D04H 3/007

(54) **MELT-BLOWN NONWOVEN FABRIC AND USE THEREOF**
SCHMELZGEBLASENER VLIESSTOFF UND VERWENDUNG
ÉTOFFE NON TISSÉE PRODUITE PAR EXTRUSION-SOUFFLAGE ET SON UTILISATION

(30) Priority: 23.08.2012 JP 2012184475
(43) Date of publication of application: 01.07.2015
(73) Proprietor: Mitsui Chemicals, Inc., Tokyo 105-7117 (JP)
(72) Inventor: IIBA, Kozo, Sodegaura-shi Chiba 299-0265 (JP); ICHIKAWA, Taro, Sodegaura-shi Chiba 299-0265 (JP); TSUDA, Takeshi, Sodegaura-shi Chiba 299-0265 (JP)
(74) Representative: Hoffmann Eitle
(86) International application number: PCT/JP2013/072522
(87) International publication number: WO 2014/030730

(56) References cited:
- EP-A1- 0 902 853
- WO-A1-96/26232
- WO-A1-2012/008169
- JP-A- 2002 201 560
- JP-A- 2004 143 632
- JP-A- 2008 114 177
- JP-A- 2008 146 001
- JP-A- 2011 110 773
- JP-A- 2011 168 944
- US-A1- 2001 050 139

## Description

### Technical Field

The present invention relates to a meltblown nonwoven fabric having a low bulk density and air permeability. More particularly, the present invention relates to a meltblown nonwoven fabric which has a low bulk density and can be preferably used in various applications such as sound absorbing materials, oil adsorbing materials, heat insulating materials and filters.

### Background Art

The living environment such as houses or offices or transportation means such as air planes, vehicles and automobiles demand calm environment wherein external noise is shut out, and sound absorbing materials made of foamed products containing air space, such as polyurethane foam and polyethylene foam, or fibrous products, such as felt and nonwoven fabric, have been widely used. These sound absorbing materials are properly used according to their requirements, and from the viewpoints of requirements, such as air permeability, lightweight property and economy, fibrous products such as nonwoven fabrics have been used.

Particularly for the transportation means such as automobiles, sound absorbing materials which are more lightweight and are excellent in sound absorption performance are desired. On this account, as a means to improve sound absorption performance, there has been proposed a method of using a laminate obtained by laminating another layer to a sound absorbing material, such as a method of setting a laminate of a meltblown nonwoven fabric and a needle punched nonwoven fabric in such a manner that the meltblown nonwoven fabric may be on the sound source side (patent literature 1), a method of bonding a flame-retardant meltblown nonwoven fabric sheet obtained by uniting meltblown ultrafine fibers and flame-retardant short fibers in a body, to a sheet material (patent literature 2), or a method of joining a film and a meltblown nonwoven fabric with an adhesive (patent literature 3).

In each of the above methods, however, the meltblown nonwoven fabric is used by laminating it with another material, so that problems of weight lightening and space saving are left. On this account, development of a novel nonwoven fabric improved in sound absorption effect has been desired.

Furthermore, US 2001/0050139 A1 describes fibrous insulation media formed from a non-woven mat of thermoplastic fibers having a mean diameter of less than about 15 microns. Preferably, when used as an acoustical insulation, the media is formed of fibers having a mean diameter of less than about 13 microns; the media has a density of less than about 60 kg/m³; and the media has a Fraiser air permeability of less than 75 cubic feet per minute per square foot of surface area (ca. 38 cc/cm²/s). The fibers may be formed from polypropylene containing a nucleating agent, preferably bis(benzylidene)sorbitol. Phosphoric acid-based nucleating agents are not disclosed.

### Citation List

### Patent Literature

Patent literature 1: Japanese Patent Laid-Open Publication 2002-200687
Patent literature 2: Japanese Patent Laid-Open Publication 1994-212546
Patent literature 3: Japanese Patent Laid-Open Publication 2008-299703

### Summary of Invention

### Technical Problem

It is an object of the present invention to provide a novel meltblown nonwoven fabric which has a low bulk density and is preferably used as a sound absorbing material though it is lightweight.

### Solution to Problem

The meltblown nonwoven fabric of the present invention comprises thermoplastic resin fibers having an average fiber diameter of 0.1 to 10 µm,
has a bulk density of 10 to 35 kg/m³,
has a thickness of 1 to 2000 mm and a basis weight of 10 to 2000 g/m², and
has an air permeability, as measured by a Frazier type method at basis weight (METSUKE) of 200 g/m², of 3 to 100 cc/cm²/sec,
wherein the thermoplastic resin fibers are formed from a thermoplastic resin composition containing a crystal nucleating agent, which is a phosphoric acid-based nucleating agent.

In such a meltblown nonwoven fabric of the present invention, the thermoplastic resin fibers are preferably formed from a thermoplastic resin composition having a half-crystallization time of not more than 400 seconds.

In the meltblown nonwoven fabric of the present invention, the thermoplastic resin fibers are formed from a thermoplastic resin composition containing a crystal nucleating agent. The thermoplastic resin composition preferably contains the crystal nucleating agent in an amount of 0.01 to 10 parts by weight based on 100 parts by weight of the thermoplastic resin. The crystal nucleating agent is a phosphoric acid-based nucleating agent.

In the meltblown nonwoven fabric of the present invention, the thermoplastic resin is preferably a polyolefin, and the thermoplastic resin is preferably a propylene-based polymer.

The meltblown nonwoven fabric of the present invention has a thickness of 1 to 2000 mm and basis weight of 10 to 2000 g/m².

In the meltblown nonwoven fabric of the present invention, fibers
other than the thermoplastic resin fibers formed by a meltblown method are preferably contained in amounts of not more than 10 parts by weight in 100 parts by weight of the meltblown nonwoven fabric.

The nonwoven fabric laminate of the present invention is obtained by laminating a spunbonded nonwoven fabric on at least one surface of the above meltblown nonwoven fabric of the present invention.

The sound absorbing material, the oil adsorbing material, the heat insulating material or the filter of the present invention comprises the meltblown nonwoven fabric of the present invention or the nonwoven fabric laminate of the present invention.

### Advantageous Effects of Invention

Since the meltblown nonwoven fabric of the present invention can be made to have a lower bulk density than other meltblown nonwoven fabrics having the same basis weight, it is excellent in sound absorption performance, oil adsorption performance, heat insulation performance and low pressure drop property, and it can be preferably used in applications such as sound absorbing materials, oil adsorbing materials, heat insulating materials and filters. Further, basis weight can be lowered while satisfactory sound absorption performance, oil adsorption performance, heat insulation performance and low pressure drop property are maintained, so that the meltblown nonwoven fabric can contribute to weight lightening and reduction of cost.

Furthermore, since the meltblown nonwoven fabric of the present invention can be preferably formed from one kind of a resin composition, it can be simply and easily produced without problems of ununiform mixing and dust as compared with the case of using mixed fibers or conjugated fibers formed from many kinds of resins, and a meltblown nonwoven fabric having uniformity and no variability of properties can be produced. Therefore, problems such as dust in use and a disadvantage in recycling can be solved.

According to the present invention, by the use of a resin composition obtained by adding a crystal nucleating agent to a crystalline thermoplastic resin, a meltblown nonwoven fabric which has a low bulk density and is excellent in properties such as sound absorption coefficient can be easily produced utilizing the existing equipment.

Since the meltblown nonwoven fabric of the present invention has a high sound absorption coefficient, even a meltblown nonwoven fabric only can be sufficiently used as a sound absorbing material, and therefore, when it is used as a sound absorbing material, weight lightening and thinning can be achieved. Also when it is laminated with another material, the resulting laminate is excellent in sound absorption performance as compared with the case of using a conventional meltblown nonwoven fabric. Therefore, the laminate is superior to other laminates having the same basis weight in sound absorption performance.

The sound absorbing material of the present invention is excellent in sound absorption performance and can be preferably used as a sound absorbing material of the living environment or the transportation means. Since the sound absorbing material, the oil adsorbing material, the heat insulating material and the filter of the present invention comprise the meltblown nonwoven fabric of the present invention, they can be obtained by a simple and easy process, and weight lightening and thinning can be achieved. Moreover, they are excellent in various performance, such as sound absorption performance, oil adsorption performance, heat insulation performance and dust collection/filtration performance.

### Description of Embodiments

The present invention is specifically described hereinafter.

A meltblown nonwoven fabric is obtained by allowing a nozzle to discharge a molten thermoplastic resin, blowing a gas to the molten resin to form fibers and colleting the fibers.

### Thermoplastic resin

The thermoplastic resin that is a raw material of the meltblown nonwoven fabric of the present invention is not specifically restricted provided that it is a thermoplastic resin capable of forming a nonwoven fabric, and publicly known various thermoplastic resins can be used. Specific examples of such thermoplastic resins include polyolefin-based polymers, e.g., polyolefins that are homopolymers or copolymers of α-olefins such as ethylene, propylene, 1-butene, 1-hexene, 4-methyl-1-pentene and 1-octene [ethylene-based polymers, e.g., homopolymers of ethylene or ethylene/α-olefin copolymers, such as high-pressure low-density polyethylene, linear low-density polyethylene (so-called LLDPE), high-density polyethylene, ethylene/propylene random copolymer and ethylene/1-butene random copolymer; propylene-based polymers, such as homopolymer of propylene (so-called polypropylene), propylene/ethylene random copolymer, propylene/ethylene/1-butene random copolymer (so-called random polypropylene), propylene block copolymer and propylene/1-butene random copolymer; 1-butene-based polymers, such as 1-butene homopolymer, 1-butene/ethylene copolymer and 1-butene/propylene copolymer; and 4-methyl-1-pentene-based polymers, such as poly-4-methyl-1-pentene homopolymer, 4-methyl-1-pentene/propylene copolymer and 4-methyl-1-pentene/α-olefin copolymer]. Further, polyesters (such as polyethylene terephthalate, polybutylene terephthalate, and polyethylene naphthalate), polyamides (such as nyolon-6, nylon-66, polymetaxylene adipamide), polyvinyl chloride, polyimide, ethylene/vinyl acetate copolymer, polyacrylonitrile, polycarbonate, polystyrene, ionomer, and mixtures thereof can be given as examples.

Of these thermoplastic resins, polyolefin-based polymers are preferable from the viewpoints of spinning stability in molding process, and processability, air permeability, softness, lightweight property and heat resistance of the nonwoven fabric. Of the polyolefin-based polymers, propylene-based polymers are preferable from the viewpoints of heat resistance and lightweight property, and of the propylene-based polymers, a propylene homopolymer or a propylene/α-olefin copolymer is preferable.

### • Propylene-based polymer

The propylene-based polymer that is preferable as the thermoplastic resin in the present invention is preferably a homopolymer of propylene or a copolymer of propylene and an extremely small amount of one or more α-olefins of 2 or more carbon atoms (except propylene), preferably 2 to 8 carbon atoms, such as ethylene, 1-butene, 1-pentene, 1-hexene, 1-octene and 4-methyl-1-pentene, said homopolymer and copolymer usually having a melting point (Tm) of not lower than 125°C, preferably 130 to 165°C.

The melt flow rate (MFR: ASTM D-1238, 230°C, load of 2160 g) of the propylene-based polymer is not specifically restricted as far as the polymer is capable of being melt-spun, but it is usually in the range of 10 to 4000 g/10 min, preferably 50 to 3000 g/10 min, more preferably 100 to 2000 g/10 min.

### Thermoplastic resin composition

The thermoplastic resin fibers to constitute the meltblown nonwoven fabric of the present invention are formed from a resin composition containing the aforesaid thermoplastic resin and a crystal nucleating agent. In such a resin composition, the nucleating agent is contained usually in an amount of 0.01 to 10 parts by weight, preferably 0.03 to 3 parts by weight, more preferably 0 . 03 to 0.5 part by weight, still more preferably 0.05 to 0.3 parts by weight, based on 100 parts by weight of the thermoplastic resin.

As the crystal nucleating agent, a crystal nucleating agent capable of becoming a nucleus in the crystallization of the thermoplastic resin is used, namely a phosphoric acid-based nucleating agent.

The crystal nucleating agent for use in the present invention means an additive that forms a nucleus formation site during crystallization of the thermoplastic resin when the thermoplastic resin is in a transition state from a molten state to a cooled solid structure. Such crystal nucleating agents may be used singly, or may be used in combination of two or more kinds.

In the production of the meltblown nonwoven fabric of the present invention, the thermoplastic resin or the thermoplastic resin composition in a molten state is spun by a meltblown method to obtain thermoplastic resin fibers for forming the meltblown nonwoven fabric. In the spinning of the thermoplastic resin composition containing a crystal nucleating agent, the crystal nucleating agent functions as a nucleus for crystallization when the molten thermoplastic resin composition is discharged from a nozzle and cooled. That is to say, a substance capable of becoming a crystal nucleus before crystallization of the thermoplastic resin is used as the crystal nucleating agent. On this account, the crystal nucleating agent used in the present invention may be one that is melted together with the thermoplastic resin when the thermoplastic resin is in a molten state, or may be one that is not completely melted but dispersed in the thermoplastic resin that is in a molten state.

The crystal nucleating agent used in the present invention is a phosphoric acid-based nucleating agent.

A phosphoric acid-based nucleating agent, such as NA-11 or NA-21, is used as the crystal nucleating agent. The phosphoric acid-based nucleating agent is used from the viewpoint of good spinning property of the meltblown nonwoven fabric.

In Japanese Patent Laid-Open Publication No. 2004-530803, polypropylene fibers produced by the use of a polypropylene resin to which a nucleating agent has been added are described, but it is only described that the shrinkage ratio is lowered in order to provide polypropylene fibers that are preferable for apparel, carpet pile, carpet backing, and molded parts.

In the thermoplastic resin composition for forming the thermoplastic resin fibers, publicly known various additives, such as antioxidant, weathering stabilizer, light stabilizer, anti-blocking agent, lubricant, pigment, softener, hydrophilizing agent, auxiliary, water repellent, filler and antibacterial agent, may be contained within limits not detrimental to the object of the present invention.

In the present invention, the half-crystallization time of the thermoplastic resin composition for forming the thermoplastic resin fibers is preferably not more than 400 seconds, more preferably not more than 250 seconds, still more preferably not more than 200 seconds. Although the lower limit of the half-crystallization time of the thermoplastic resin composition is not specifically restricted, it is preferably not less than 5 seconds.

In the case where the meltblown nonwoven fabric is produced using such a thermoplastic resin composition, fibers formed are crystallized for a shorter period of time when the fibers are formed by a meltblown method, as compared with the case of using a usual thermoplastic resin. Therefore, fusion bonding of the fibers is inhibited, and shifting of the nonwoven fabric to a dense structure due to fusion bonding of the fibers can be preferably prevented, whereby the resulting meltblown nonwoven fabric has an extremely low bulk density, so that use of such a thermoplastic resin composition is preferable.

### Meltblown nonwoven fabric

The meltblown nonwoven fabric of the present invention can be obtained by spinning the above-mentioned thermoplastic resin or thermoplastic resin composition by a meltblown method and collecting thermoplastic resin fibers formed. As a meltblown spinning nozzle used for producing the meltblown nonwoven fabric of the present invention, any of nozzles used for producing publicly known meltblown nonwoven fabrics from thermoplastic resins can be used, and a nozzle pore diameter can be properly selected in consideration of the desired fiber diameter. That is to say, an apparatus equipped with a group of nozzles having pores of single pore diameter may be used, or an apparatus equipped with a group of nozzles having pores of two or more different pore diameters in a desired ratio may be used. For example, when the meltblown nonwoven fabric of the present invention is produced by the use of an apparatus having nozzles of two different pore diameters, an apparatus having a nozzle (small pore diameter-nozzle) with a nozzle pore diameter of 0.07 to 0.3 mm and a nozzle (large pore diameter-nozzle) with a nozzle pore diameter of 0.5 to 1.2 mm can be used. As the apparatus having such a group of nozzles, an apparatus wherein the pore diameter ratio of the large pore diameter-nozzle to the small pore diameter-nozzle (large pore diameter-nozzle/small pore diameter-nozzle) exceeds 2 and the ratio of the number of the small pore diameter-nozzles to the number of the large pore diameter-nozzles (small pore diameter-nozzles/large pore diameter-nozzles) is in the range of 3 to 20 can be used.

The average fiber diameter of the thermoplastic resin fibers for constituting the meltblown nonwoven fabric of the present invention is usually in the range of 0.1 to 10 µm, preferably 1 to 10 µm.

It is also preferable to produce the meltblown nonwoven fabric of the present invention by the use of nozzles of plural pore diameters, and therefore, it is also preferable that in a distribution of fiber diameters of the fibers to constitute the meltblown nonwoven fabric, there are two or more peaks usually in the range of 0.1 to 10 µm.

The bulk density of the meltblown nonwoven fabric of the present invention is 10 to 35 kg/m³.

The air permeability of the meltblown nonwoven fabric of the present invention, as measured by Frazier type method, is 3 to 100 cc/cm²/sec, preferably 3 to 50 cc/cm²/sec, more preferably 3 to 20 cc/cm²/ sec.

The meltblown nonwoven fabric of the present invention comprises thermoplastic resin fibers. That is to say, the meltblown nonwoven fabric of the present invention is a nonwoven fabric mainly formed from fibers obtained by spinning a thermoplastic resin or a thermoplastic resin composition through a meltblown method.

The meltblown nonwoven fabric of the present invention contains, as main components, fibers formed by spinning a thermoplastic resin or a thermoplastic resin composition, preferably the aforesaid thermoplastic resin composition, through a meltblown method.

The meltblown nonwoven fabric of the present invention is particularly preferably composed of only fibers that are formed from the aforesaid thermoplastic resin composition through a meltblown method, but it may contain other fibers in such amounts that the aforesaid bulk density and air permeability are satisfied. The fibers other than the fibers formed from the thermoplastic resin composition by a meltblown method (also referred to as "other fibers" hereinafter) may be short fibers or long fibers, and may be crimped fibers or non-crimped fibers. These other fibers can be added for an arbitrary purpose, such as impartation of mechanical properties (e.g., impartation of strength), impartation of chemical properties or extending.

When the meltblown nonwoven fabric of the present invention contains, as other fibers, fibers formed by a method other than the meltblown method, such as short fibers, those fibers are preferably fibers rarely undergoing fusion bonding, and for example, fibers obtained from the aforesaid thermoplastic resin composition may be contained. Further, short fibers made of polyesters, such as polyethylene terephthalate, polybutylene terephthalate and polyethylene naphthalate, may be contained.

When the meltblown nonwoven fabric of the present invention contains other fibers, the amount of the other fibers is not specifically restricted provided that the meltblown nonwoven fabric has a bulk density and an air permeability of the aforesaid ranges, and the content of other fibers is desired to be usually not more than 20 parts by weight, preferably not more than 10 parts by weight, more preferably not more than 5 parts by weight, in 100 parts by weight of the meltblown nonwoven fabric. As the content of other fibers is decreased, the meltblown nonwoven fabric is more excellent in recycling property, low-lint property (low-fluff property) and productivity.

Thebasis weight (METSUKE) of the meltblown nonwoven fabric of the present invention is in the range of 10 to 2000 g/m², preferably 50 to 400 g/m², but it can be variously determined according to the use purpose and the scale used. For example, when the meltblown nonwoven fabric of the present invention is used in the form of a single layer as a sound absorbing material, the basis weight can be set usually in the range of 30 to 1000 g/m², preferably 50 to 400 g/m². When the meltblown nonwoven fabric of the present invention is used in the form of a single layer as an oil adsorbing material, the basis weight can be set usually in the range of 30 to 1000 g/m², preferably 100 to 500 g/m². When the meltblown nonwoven fabric of the present invention is used in the form of a single layer as a heat insulating material, the basis weight can be set usually in the range of 50 to 2000 g/m², preferably 100 to 1000 g/m². When the meltblown nonwoven fabric of the present invention is used in the form of a single layer as a filter, the basis weight can be set usually in the range of 10 to 500 g/m², preferably 15 to 200 g/m².

When the meltblown nonwoven fabric of the present invention is used in the form of a nonwoven fabric laminate in which the meltblown nonwoven fabric is laminated with another layer such as the later-described spunbonded nonwoven fabric, the basis weight of the meltblown nonwoven fabric can be set usually in the range of 10 to 1000 g/m², preferably 20 to 600 g/m², more preferably 30 to 400 g/m², still more preferably 40 to 390 g/m².

The thickness of the meltblown nonwoven fabric of the present invention can be variously determined according to the use purpose. For example, when the meltblown nonwoven fabric of the present invention is used as a sound absorbing material, the thickness is usually in the range of 2 to 35 mm, more preferably 3.5 to 25 mm. A sound absorbing material having a thickness of the above range is lightweight and exhibits satisfactory sound absorption performance.

The meltblown nonwoven fabric of the present invention may be laminated with other layers within limits not detrimental to the effects of the present invention. Specific examples of other layers laminated with the meltblown nonwoven fabric of the present invention include layers of knitted fabrics, woven fabrics, nonwoven fabrics, films and paper products. For laminating (bonding) the meltblown nonwoven fabric of the present invention with other layers, publicly known various methods, e.g., thermal fusion bonding methods such as hot embossing and ultrasonic fusion bonding, mechanical entanglement methods such as needle punching and water jetting, methods using adhesives such as hot melt adhesives or urethane adhesives, and extrusion laminating, can be adopted.

The meltblown nonwoven fabric of the present invention can be preferably used in the form of a nonwoven fabric laminate in which the meltblown nonwoven fabric of the present invention is laminated with another nonwoven fabric among the above materials. As the nonwoven fabric to be laminated with the meltblown nonwoven fabric of the present invention, a meltblown nonwoven fabric other than the present invention or a spunbonded nonwoven fabric can be mentioned, and a spunbonded nonwoven fabric is more preferably used. Specifically, a nonwoven fabric laminate obtained by laminating a spunbonded nonwoven fabric on one surface or each surface of the meltblown nonwoven fabric of the present invention can be mentioned. The nonwoven fabric laminate of the present invention may have two or more layers of the meltblown nonwoven fabrics of the present invention.

The meltblown nonwoven fabric of the present invention may be subjected to secondary processing, such as gear processing, printing, coating, laminating, heat treatment and shaping, within limits not detrimental to the object of the present invention.

The meltblown nonwoven fabric of the present invention can be preferably used alone or in the form of a laminate in various applications in which meltblown nonwoven fabrics have been used, and it can be particularly preferably used in applications such as sound absorbing materials, oil adsorbing materials, heat insulating materials and filters.

### Sound absorbing material

The sound absorbing material of the present invention comprises at least one layer of the aforesaid meltblown nonwoven fabric. The sound absorbing material of the present invention may be a sound absorbing material using a single layer of the meltblown nonwoven fabric of the present invention, or may be a sound absorbing material using two or more layers thereof laminated, or may be a sound absorbing material in which at least one layer of the meltblown nonwoven fabric of the present invention and one or more other layers are laminated in an arbitrary order. Examples of other layers include layers of a spunbonded nonwoven fabric, a meltblown nonwoven fabric other than the meltblown nonwoven fabric of the present invention and various films. The thickness and the basis weight of the sound absorbing material of the present invention can be properly selected in consideration of an object for which the sound absorbing material is used and the desired sound absorption performance.

When a single layer of the meltblown nonwoven fabric of the present invention is used as the sound absorbing material of the present invention, the sound absorbing material exhibits excellent sound absorption performance of preferably absorbing sounds of high frequencies, and for example, the sound absorption coefficient at a frequency of 1000 Hz, as measured by a normal incidence method, can be increased to not less than 10%, and the sound absorption coefficient at a frequency of 5000 Hz can be increased to not less than 50%.

The sound absorbing material using the meltblown nonwoven fabric of the present invention can be preferably used for buildings or transportation means, and it can be arranged in a preferred manner against the sound source, that is, the side where a noise is generated, according to the condition of the above lamination.

### Oil adsorbing material

The oil adsorbing material of the present invention comprises the meltblown nonwoven fabric of the present invention. The oil adsorbing material of the present invention may be an oil adsorbing material using a single layer of the meltblown nonwoven fabric of the present invention, or may be an oil adsorbing material using two or more layers thereof laminated, or may be an oil adsorbing material in which at least one layer of the meltblown nonwoven fabric of the present invention and one or more other layers are laminated in an arbitrary order. The thickness and the basis weight of the oil adsorbing material of the present invention can be properly selected in consideration of the use purpose of the oil adsorbing material and the desired amount adsorbed.

Such an oil adsorbing material of the present invention exhibits excellent oil adsorption performance, so that the oil adsorbing material can be used for oil recovery by adsorption or oil recovery by wiping out without any restriction, and it is preferable for treatment of contamination of seas, rivers, and lakes and marshes caused by leakage or outflow of an oil or sewage or for treatment of leakage of an oil or sewage in factory, by means of adsorption recovery or wiping out. The oil adsorbing material of the present invention can be particularly preferably used for adsorption recovery of an outflow oil on a water surface. When the oil adsorbing material of the present invention is used for adsorption recovery of an outflow oil on a water surface, it is also preferable to combine the meltblown nonwoven fabric of the present invention with a material of large buoyancy by laminating.

### Heat insulating material

The heat insulating material of the present invention comprises the meltblown nonwoven fabric of the present invention. The heat insulting material of the present invention may be a heat insulating material using a single layer of the meltblown nonwoven fabric of the present invention, or may be a heat insulating material using two or more layers thereof laminated, or may be a heat insulating material in which at least one layer of the meltblown nonwoven fabric of the present invention and one or more other layers are laminated in an arbitrary order. The thickness and the basis weight of the heat insulating material of the present invention can be properly selected in consideration of the desired heat insulation performance.

The heat insulating material of the present invention can be used for various buildings and transportation means without any restriction, and for example, it can be preferably used as a heat insulating material for constituting a heat insulating wall in which a heat insulating material is provided between an interior finishing material and an exterior finishing material.

### Filter

The filter of the present invention comprises the meltblown nonwoven fabric of the present invention. The filter of the present invention can be used for any of a gas and a liquid, and can be preferably used as a dust collecting filter or a filtration filter.

The filter of the present invention may be a filter using a single layer of the meltblown nonwoven fabric of the present invention, or may be a filter using two or more layers thereof laminated, or may be a filter in which at least one layer of the meltblown nonwoven fabric of the present invention and one or more other layers are laminated in an arbitrary order. Examples of other layers include layers of a spunbonded nonwoven fabric, a meltblown nonwoven fabric other than the meltblown nonwoven fabric of the present invention and various films having pores.

The thickness, the basis weight, and the fiber diameter of the filter of the present invention can be properly selected in consideration of the desired filter performance.

### Examples

The present invention will be more specifically described on the basis of the following examples, but it should be construed that the present invention is in no way limited to those examples.

In the following examples and comparative examples, measurement and evaluation were carried out in the following manner.

### (1) Basis weight (METSUKE) (g/m²)

From a meltblown nonwoven fabric, 10 samples each having a size of 100 mm (machine direction (MD)) × 100 mm (cross direction (CD)) were obtained, and a mean value was calculated.

### (2) Thickness (mm)

Thickness of the above sample for basis weight measurement was measured at 5 points of the center and 4 corners of the sample. A mean value of 50 samples was calculated. A thickness meter capable of applying a load of 7 g/cm² was used.

### (3) Half-crystallization time (second(s))

DSC measuring equipment: Perkin Elmer DSC-7
Sampling: A meltblown nonwoven fabric was subjected to hot pressing at 230°C to prepare a thin sheet, and the thin sheet was cut into a given size and introduced into a given container.

Measuring conditions: The temperature of the sample was raised up to 230°C at 320°C/min, and the sample was preheated for 10 minutes in an atmosphere of 230°C. Thereafter, the temperature of the sample was lowered down to 130°C at 320°C/min, and the sample was held in an atmosphere of 130°C. A period of time required for reaching 1/2 of the total quantity of heat of crystallization obtained at that time was taken as a half-crystallization time.

### (4) Average fiber diameter (µm)

A photograph of 1000 magnifications of a meltblown nonwoven fabric was taken by the use of a Hitachi electron microscope "S-3500N", and 100 fibers were selected at random. The widths (diameters) of the fibers were measured, and an average fiber diameter in terms of a number-average fiber diameter was calculated.

### (5) Bulk density (kg/m³)

The thickness defined in the above (2) was divided by the basis weight defined in the above (1), and the resulting value was taken as a bulk density.

### (6) Air permeability (cc/cm²/sec)

At 5 points of a meltblown nonwoven fabric, the quantity of airflow at a pressure difference of 125 Pa was measured using a Frazier type testing machine in accordance with JIS L1096, and a mean value was determined.

### (7) Sound absorption coefficient (sound absorption performance)

From a meltblown nonwoven fabric, a circular specimen having a diameter of 29 mm was obtained, and a normal incident sound absorption coefficient given when a plane sound wave vertically entered the specimen was measured at a frequency of 1000 to 6400 Hz using a normal incident sound absorption coefficient measuring device (TYPE 4206 manufactured by Brüel & Kjær) in accordance with ASTM E 1050. From the resulting sound absorption coefficient curve of 1000 to 6400 Hz, sound absorption coefficients at 1000 Hz and 5000 Hz were determined.

### [Example 1]

A propylene homopolymer [MFR = 1550 g/10 min (measured at a temperature of 230°C under a load of 2.16 kg in accordance with ASTM D1238), expressed by "PP" hereinafter] was used as a thermoplastic resin, and thereto was added a phosphoric acid-based nucleating agent (Na11 available from Adeka Corporation, expressed by a "nucleating agent A" hereinafter) in an amount of 0.3 part by weight based on 100 parts by weight of PP to obtain a thermoplastic resin composition. Using a meltblown nonwoven fabric production apparatus equipped with meltblown spinning nozzles comprising, as a minimum repeating unit, five small pore diameter-nozzles each having a nozzle pore diameter of 0.15 mm and one large pore diameter-nozzle having a nozzle pore diameter of 0. 6 mm, the thermoplastic resin composition was extruded at 300°C and fined/solidified by means of hot air (300°C, 350 Nm³/m/hr) blown out from both sides of the spinning nozzles. Thereafter, the fibers were collected at a distance of 40 cm from the spinning nozzles to obtain a meltblown nonwoven fabric having basis weight of 200 g/m². The measurement results of the resulting meltblown nonwoven fabric are set forth in Table 1.

### [Example 2]

A meltblown nonwoven fabric was obtained in the same manner as described in Example 1, except that the nozzles were changed to meltblown spinning nozzles having uniform pores each having a pore diameter of 0. 6mm. The measurement results of the resulting meltblown nonwoven fabric are set forth in Table 1.

### [Example 3]

Using the meltblown spinning nozzles used in Example 1, a meltblown nonwoven fabric was obtained in the same manner as in Example 1, except that the amount of the nucleating agent A added was changed to 0.1 part by weight based on 100 parts by weight of PP. The measurement results of the resulting meltblown nonwoven fabric are set forth in Table 1.

### [Example 4]

Using the meltblown spinning nozzles used in Example 1, a meltblown nonwoven fabric was obtained in the same manner as in Example 1, except that the amount of the nucleating agent A added was changed to 0.05 part by weight based on 100 parts by weight of PP. The measurement results of the resulting meltblown nonwoven fabric are set forth in Table 1.

### [Example 5]

A meltblown nonwoven fabric having basis weight of 150 g/m² was obtained in the same manner as described in Example 1, except that the basis weight was changed. The measurement results of the resulting meltblown nonwoven fabric are set forth in Table 1.

### [Comparative Example 1]

A meltblown nonwoven fabric was obtained in the same manner as described in Example 1, except that the nucleating agent A was not added. The measurement results of the resulting meltblown nonwoven fabric are set forth in Table 1. The resulting meltblown nonwoven fabric had a high bulk density and did not exhibit good sound absorption performance.

### [Comparative Example 2]

A meltblown nonwoven fabric was obtained in the same manner as described in Example 2, except that the nucleating agent A was not added. The measurement results of the resulting meltblown nonwoven fabric are set forth in Table 1. The resulting meltblown nonwoven fabric had a high bulk density and did not exhibit good sound absorption performance.

### [Comparative Example 3]

A meltblown nonwoven fabric was obtained in the same manner as described in Example 5, except that the nucleating agent A was not added. The measurement results of the resulting meltblown nonwoven fabric are set forth in Table 1. The resulting meltblown nonwoven fabric had a high bulk density and did not exhibit good sound absorption performance.

### [Table 1]

**Table 1**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Resin species | PP | PP | PP | PP | PP | PP | PP | PP |
| Nozzles | different pore diameters | uniform pore diameters | different pore diameters | different pore diameters | different pore diameters | different pore diameters | uniform pore diameters | different pore diameters |
| Amount of crystal nucleating agent added [part(s) by weight] | 0.3 | 0.3 | 0.1 | 0.1 | 0.3 | none | none | none |
| Bulk density [kg/m³] | 27.5 | 28.3 | 28.6 | 34.2 | 29.8 | 42.5 | 44.7 | 42.0 |
| Air permeability [cc/cm²/sec] | 14.2 | 14.1 | 16.2 | 17.8 | 11.1 | 13.4 | 25.0 | 23.4 |
| Average fiber diameter [µm] | 7.1 | 7.1 | 8.1 | 8.9 | 5.6 | 6.7 | 12.5 | 11.7 |
| Basis weight (METSUKE) [g/m²] | 207 | 192 | 192 | 195 | 146 | 203 | 201 | 149 |
| Thickness [mm] | 7.5 | 6.8 | 6.7 | 5.7 | 4.9 | 4.8 | 4.5 | 3.6 |
| Half-crystallization time [s] | 79 | 79 | 150 | 200 | 79 | 647 | 647 | 647 |
| Sound absorption coefficient 1000 Hz [%] | 12 | 11 | 11 | 10 | 5 | 7 | 7 | 3 |
| Sound absorption coefficient 5000 Hz [%] | 81 | 79 | 65 | 61 | 51 | 49 | 44 | 33 |

### Industrial Applicability

The meltblown nonwoven fabric of the present invention can be used, without any restriction, in applications in which conventional meltblown nonwoven fabrics are used, and can be preferably used particularly as any of soundproofing materials or heat insulating materials of the living environment such as houses or transportation means such as automobiles, vehicles and air planes, oil adsorbing materials for adsorbing an outflow oil on a water surface, filtration filters, and dust collecting filters.

## Claims

1. A meltblown nonwoven fabric comprising thermoplastic resin fibers with an average fiber diameter of 0.1 to 10 µm,
having a bulk density of 10 to 35 kg/m³,
having a thickness of 1 to 2000 mm and a basis weight of 10 to 2000 g/m², and
having an air permeability, as measured by a Frazier type method at basis weight of 200 g/m², of 3 to 100 cc/cm²/sec,
wherein the thermoplastic resin fibers are formed from a thermoplastic resin composition containing a crystal nucleating agent, which is a phosphoric acid-based nucleating agent, and
wherein the bulk density, the thickness, the basis weight and the air permeability are measured as described in the Examples of the description.

2. The meltblown nonwoven fabric as claimed in claim 1, wherein the thermoplastic resin fibers are formed from a thermoplastic resin composition having a half-crystallization time of not more than 400 seconds, the half-crystallization time is measured by DSC using a sample, which is prepared by subjecting the meltblown nonwoven fabric to hot pressing at 230°C to form a sheet and cutting, wherein the temperature of the sample was raised to 230°C at 320°C/min and the sample was preheated for 10 minutes in an atmosphere of 230°C, thereafter, the temperature of the sample was lowered to 130°C at 320°C/min and the sample was held in an atmosphere of 130°C, and the half-crystallization time is the period of time required for reaching 1/2 of the total quantity of heat of crystallization.

3. The meltblown nonwoven fabric as claimed in claim 1, wherein the thermoplastic resin composition contains the crystal nucleating agent in an amount of 0.01 to 10 parts by weight based on 100 parts by weight of the thermoplastic resin.

4. The meltblown nonwoven fabric as claimed in claim 1, wherein the thermoplastic resin is a polyolefin.

5. The meltblown nonwoven fabric as claimed in claim 1, wherein the thermoplastic resin is a propylene-based polymer.

6. The meltblown nonwoven fabric as claimed in claim 1, wherein fibers other than the thermoplastic resin fibers formed by a meltblown method are contained in amounts of not more than 10 parts by weight in 100 parts by weight of the meltblown nonwoven fabric.

7. A nonwoven fabric laminate obtained by laminating a spunbonded nonwoven fabric on at least one surface of the meltblown nonwoven fabric as claimed in any one of claims 1 to 6.

8. A sound absorbing material comprising the meltblown nonwoven fabric as claimed in any one of claims 1 to 6.

9. A sound absorbing material comprising the nonwoven fabric laminate as claimed in claim 7.

## Patentansprüche

1. Schmelzgeblasener (Meltblown-) Vliesstoff, der thermoplastische Harzfasern mit einem durchschnittlichen Faserdurchmesser von 0,1 bis 10 µm umfasst,
der eine Schüttdichte von 10 bis 35 kg/m³ aufweist,
der eine Dicke von 1 bis 2000 mm und ein Flächengewicht von 10 bis 2000 g/m² aufweist, und
der eine Luftdurchlässigkeit, gemessen nach einem Frazier-Verfahren bei einem Flächengewicht von 200 g/m², von 3 bis 100 cc/cm²/sec aufweist,
wobei die thermoplastischen Harzfasern aus einer thermoplastischen Harzzusammensetzung gebildet sind, die ein Kristallkeimbildungsmittel enthält, das ein Phosphorsäure-basiertes Keimbildendungsmittel ist, und
wobei die Schüttdichte, die Dicke, das Flächengewicht und die Luftdurchlässigkeit, wie in den Beispielen der Beschreibung beschrieben, gemessen werden.

2. Schmelzgeblasener Vliesstoff gemäß Anspruch 1, wobei die thermoplastischen Harzfasern aus einer thermoplastischen Harzzusammensetzung mit einer Halbkristallisationszeit von nicht mehr als 400 Sekunden gebildet sind, wobei die Halbkristallisationszeit mittels DSC unter Verwendung einer Probe gemessen wird, die hergestellt wird, indem der schmelzgeblasene Vliesstoff bei 230°C heißgepresst wird, um eine Folie zu bilden, und zurechtgeschnitten wird, wobei die Temperatur der Probe bei 320°C/min auf 230°C erhöht wird und die Probe 10 Minuten in einer Atmosphäre von 230°C vorerhitzt wird, danach die Temperatur der Probe bei 320°C/min auf 130°C abgesenkt wird und die Probe in einer Atmosphäre von 130°C belassen wird, und wobei die Halbkristallisationszeit die benötigte Zeitspanne ist, um 1/2 der Gesamtmenge der Kristallisationswärme zu erreichen.

3. Schmelzgeblasener Vliesstoff gemäß Anspruch 1, wobei die thermoplastische Harzzusammensetzung das Kristallkeimbildungsmittel in einer Menge von 0,01 bis 10 Gewichtsteilen, bezogen auf 100 Gewichtsteile des thermoplastischen Harzes, enthält.

4. Schmelzgeblasener Vliesstoff gemäß Anspruch 1, wobei das thermoplastische Harz ein Polyolefin ist.

5. Schmelzgeblasener Vliesstoff gemäß Anspruch 1, wobei das thermoplastische Harz ein Propylen-basiertes Polymer ist.

6. Schmelzgeblasener Vliesstoff gemäß Anspruch 1, wobei Fasern, die von den durch ein Schmelzblasverfahren gebildeten thermoplastischen Harzfasern verschieden sind, in Mengen von nicht mehr als 10 Gewichtsteilen in 100 Gewichtsteilen des schmelzgeblasenen Vliesstoffes enthalten sind.

7. Vliesstofflaminat, erhalten durch Laminieren eines Spinnvliesstoffes auf mindestens eine Oberfläche des schmelzgeblasenen Vliesstoffes gemäß einem der Ansprüche 1 bis 6.

8. Schalldämmendes Material, umfassend den schmelzgeblasenen Vliesstoff gemäß einem der Ansprüche 1 bis 6.

9. Schalldämmendes Material, umfassend das Vliesstofflaminat gemäß Anspruch 7.

## Revendications

1. Tissu non-tissé soufflé comprenant des fibres de résine thermoplastique avec un diamètre de fibre moyen de 0,1 to 10 µm,
ayant une densité volumique de 10 à 35 kg/m³,
ayant une épaisseur de 1 à 2000 mm et une poids de base de 10 à 2000 g/m², et
ayant une perméabilité à l'air, telle que mesurée par une méthode de type Frazier à un poids moyen de 200 g/m², de 3 à 100 cc/cm²/seconde,
dans lequel les fibres de résine thermoplastique sont formées à partir d'une composition de résine thermoplastique contenant un agent de nucléation de cristal, qui est un agent de nucléation à base d'acide phosphorique, et
dans lequel la densité massique, l'épaisseur, le poids de base et la perméabilité à l'air sont mesurées comme décrit dans les exemples de la description.

2. Le tissu non-tissé soufflé tel que revendiqué dans la revendication 1,
dans lequel les fibres de résine thermoplastique sont formées à partir d'une composition de résine thermoplastique ayant un temps de demi-cristallisation non supérieur à 400 secondes, le temps de demi-cristallisation est mesuré par analyse calorimétrique différentielle (DSC) en utilisant un échantillon, qui est préparé en soumettant le tissu non-tissé soufflé à un pressage à chaud à 230°C pour former une feuille et au découpage, dans lequel la température de l'échantillon a été élevée à 230°C à 320°C/minute et l'échantillon a été préchauffé pendant 10 minutes dans une atmosphère de 230°C, et ensuite, la température de l'échantillon a été diminuée à 130°C à 320°C/minute et l'échantillon a été maintenu dans une atmosphère de 130°C, et le temps de demi-cristallisation est la période de temps requise pour atteindre 1/2 de la quantité totale de chaleur de cristallisation.

3. Le tissu non-tissé soufflé tel que revendiqué dans la revendication 1,
dans lequel la composition de résine thermoplastique contient l'agent de nucléation de cristal dans une quantité de 0,01 à 10 parties en poids sur la base de 100 parties en poids de la résine thermoplastique.

4. Le tissu non-tissé soufflé tel que revendiqué dans la revendication 1,
dans lequel la résine thermoplastique est une polyoléfine.

5. Le tissu non-tissé soufflé tel que revendiqué dans la revendication 1,
dans lequel la résine thermoplastique est un polymère à base de propylène.

6. Le tissu non-tissé soufflé tel que revendiqué dans la revendication 1,
dans lequel les fibres autres que les fibres de résine thermoplastique formées par une méthode de soufflage sont contenues dans des quantités non supérieures à 10 parts en poids dans 100 parties en poids du tissu non-tissé soufflé.

7. Stratifié de tissu non-tissé obtenu en laminant un tissu non-tissé de type filé-lié (spunbonded) sur au moins une surface du tissu non-tissé soufflé tel que revendiqué dans l'une quelconque des revendications 1 à 6.

8. Matériau absorbant le son comprenant le tissu non-tissé soufflé tel que revendiqué dans l'une quelconque des revendications 1 à 6.

9. Matériau absorbant le son comprenant le stratifié de tissu non-tissé te que revendiqué dans la revendication 7.
